(19) **Europäisches Patentamt**

**European Patent Office**

**Office européen des brevets**

(11) **EP 1 713 246 A1**

(12) **EUROPÄISCHE PATENTANMELDUNG**

(43) Veröffentlichungstag:
**18.10.2006 Patentblatt 2006/42**

(51) Int Cl.:
*H04M 15/00* (2006.01)    *H04M 15/12* (2006.01)
*H04L 12/14* (2006.01)    *H04L 12/56* (2006.01)
*H04L 12/18* (2006.01)    *H04Q 7/38* (2006.01)

(21) Anmeldenummer: 05090099.2

(22) Anmeldetag: **11.04.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(71) Anmelder: **SIEMENS AKTIENGESELLSCHAFT
80333 München (DE)**

(72) Erfinder:
• **Föll, Uwe
14612 Falkensee (DE)**
• **Görmer, Gerald
16352 Wandlitz (DE)**

(54) **Verfahren zum Ermitteln von Kommunikationsgebühren für einen IP Gruppenkommunikationsdienst (Push to Talk)**

(57)    Die Erfindung betrifft ein Verfahren zum Ermitteln von Kommunikationsgebühren bei einem für eine Gruppe von Kommunikationsendgeräten durchzuführenden Gruppenkommunikationsdienst. Bei diesem Gruppenkommunikationsdienst wird den Kommunikationsendgeräten der Gruppe jeweils ein Server (S1, S2, S3) zugeordnet, und jeweils einem Kommunikationsendgerät der Gruppe wird temporär eine Genehmigung erteilt, eine Sprachnachricht (SN) abzusenden. Eine abgesendete Sprachnachricht wird an die anderen Kommunikationsendgeräte der Gruppe übertragen mittels der den Kommunikationsendgeräten der Gruppe zugeordneten Server (S1, S2, S3). Bei dem Verfahren empfängt einer der Server (S1) von den anderen Servern (S2, S3) Informationen über die empfangsbereiten Kommunikationsendgeräte (KEG4, KEG5, KEG6) der Gruppe. Bei Übertragung einer Sprachnachricht (SN) wird von diesem Server mittels der empfangenen Informationen die Anzahl der zum Übertragungszeitpunkt für diese Sprachnachricht empfangsbereiten Kommunikationsendgeräte (KEG2, KEG4, KEG5, KEG6) bestimmt, und anhand der bestimmten Anzahl der Kommunikationsendgeräte wird die Höhe der für diese Sprachnachricht (SN) anzuwendenden Kommunikationsgebühr ermittelt.

FIG 2

**Beschreibung**

Die Erfindung betrifft ein Verfahren zum Ermitteln von Kommunikationsgebühren bei einem für eine Gruppe von Kommunikationsendgeräten durchzuführenden Gruppenkommunikationsdienst.

In modernen Telekommunikationsnetzen sind Gruppenkommunikationsdienste bekannt, bei denen eine Kommunikation zwischen solchen Kommunikationsendgeräten durchgeführt wird, die zu einer Gruppe von Kommunikationsendgeräten gehören. Die Gruppe von Kommunikationsendgeräten kann eine vorbestimmte feste Gruppe sein, diese Gruppe kann aber auch im Laufe der Zeit geändert werden, d.h. die der Gruppe zugehörigen Kommunikationsendgeräte können variieren. Bevor ein Kommunikationsendgerät an einem solchen Gruppenkommunikationsdienst teilnehmen kann, muss es als ein einer Gruppe zugehöriges Kommunikationsendgerät registriert werden.

Der Erfindung liegt die Aufgabe zugrunde, ein Verfahren anzugeben, mit dem bei der Durchführung von Gruppenkommunikationsdiensten Kommunikationsgebühren ermittelt werden können.

Diese Aufgabe wird erfindungsgemäß gelöst durch ein Verfahren zum Ermitteln von Kommunikationsgebühren bei einem für eine Gruppe von Kommunikationsendgeräten durchzuführenden Gruppenkommunikationsdienst, wobei bei diesem Gruppenkommunikationsdienst den Kommunikationsendgeräten der Gruppe jeweils ein Server zugeordnet ist, jeweils einem Kommunikationsendgerät der Gruppe temporär eine Genehmigung erteilt wird, (als einziges Kommunikationsendgerät der Gruppe) eine Sprachnachricht abzusenden, und eine abgesendete Sprachnachricht an die anderen Kommunikationsendgeräte der Gruppe übertragen wird mittels der den Kommunikationsendgeräten der Gruppe zugeordneten Server,

wobei bei dem Verfahren einer der Server von den anderen Servern Informationen über die empfangsbereiten Kommunikationsendgeräte der Gruppe empfängt, bei Übertragung einer Sprachnachricht von diesem Server mittels der empfangenen Informationen die Anzahl der zum Übertragungszeitpunkt für diese Sprachnachricht empfangsbereiten Kommunikationsendgeräte bestimmt wird, und

anhand der bestimmten Anzahl der Kommunikationsendgeräte die Höhe der für diese Sprachnachricht anzuwendenden Kommunikationsgebühr ermittelt wird. Hierbei ist insbesondere vorteilhaft, dass von den Servern der Gruppe an den einen Server die Informationen über die jeweils zugeordneten empfangsbereiten Kommunikationsendgeräte übertragen werden und dass der diese Informationen empfangende Server daraufhin die Anzahl der zum Übertragungszeitpunkt für diese Sprachnachricht empfangsbereiten Kommunikationsendgeräte bestimmt. Dadurch kann unter Nutzung der Anzahl die Höhe der für diese Sprachnachricht anzuwendenden Kommunikationsgebühr ermittelt werden.

Das Verfahren kann so ablaufen, dass bei Aufbau der Gruppe von Kommunikationsendgeräten der eine Server die Informationen über die empfangsbereiten Kommunikationsendgeräte der Gruppe empfängt. Hierbei werden vorteilhafterweise schon beim Aufbau der Gruppe (d. h. bei der Registrierung der Kommunikationsendgeräte für eine bestimmte Gruppe) die Informationen über die jeweils zugeordneten empfangsbereiten Kommunikationsendgeräte an den einen Server übertragen und von diesem empfangen.

Das Verfahren kann vorteilhafterweise auch so ablaufen, dass bei einer Änderung der Anzahl der empfangsbereiten Kommunikationsendgeräte der Gruppe der eine Server die Informationen über die empfangsbereiten Kommunikationsendgeräte der Gruppe empfängt. Vorteilhafterweise werden hierbei bei jeder Änderung der Anzahl der empfangsbereiten Kommunikationsendgeräte die Informationen an den einen Server gesendet und von diesem empfangen. Dadurch wird der eine Server stets mit aktuellen Informationen versorgt.

Bei dem erfindungsgemäßen Verfahren kann anhand der bestimmten Anzahl und der zeitlichen Dauer der Sprachnachricht die Höhe der für diese Sprachnachricht anzuwendenden Kommunikationsgebühr ermittelt werden.

Das erfindungsgemäßen Verfahren kann auch so ablaufen, dass anhand der bestimmten Anzahl und der Datenmenge der Sprachnachricht die Höhe der für diese Sprachnachricht anzuwendenden Kommunikationsgebühr ermittelt wird.

Bei den beiden vorgenannten Ausführungsformen des erfindungsgemäßen Verfahrens wird vorteilhafterweise neben der Anzahl der empfangsbereiten Empfänger-Kommunikationsendgeräte zusätzlich eine sprachnachrichtenspezifische Größe (Dauer bzw. Datenmenge der Sprachnachricht) zur Ermittlung der Höhe der Kommunikationsgebühr herangezogen.

Das Verfahren kann erfindungsgemäß auch so ablaufen, dass die zeitliche Dauer der Sprachnachricht oder die Datenmenge der Sprachnachricht von dem Server ermittelt wird, der dem die Sprachnachricht absendenden Kommunikationsendgerät jeweils zugeordnet ist. Hierbei wird die Ermittlung der zeitlichen Dauer bzw. der Datenmenge der Sprachnachricht in den Kommunikationsnetzen verteilt durchgeführt, nämlich jeweils von dem Server, welcher dem absendenden Kommunikationsendgerät zugeordnet ist. Dies ermöglicht eine einfache Ermittlung der Dauer bzw. der Datenmenge.

Das erfindungsgemäße Verfahren kann so ablaufen, dass von dem die Kommunikationsgebühr ermittelnden Server ein die Kommunikationsgebühr beschreibender Gebührendatensatz an ein Gebührenabrechnungssystem gesendet wird, welches zu einem späteren Zeitpunkt die Kommunikationsgebühr abrechnet. Dies ermöglicht es vorteilhafterweise, das erfindungsgemäße Verfahren zusammen mit als solches in Kommunikationsnetzen bereits eingesetzten Gebührenabrechnungssystemen anzuwenden, welche auch als "Postprocessing-Gebührenabrechnungssysteme" bezeichnet werden. Derartige Gebührenabrechnungssysteme dienen beispielsweise der Erstellung von Rechnungen für die Nutzer von Kommunikationsendgeräten.

Das erfindungsgemäße Verfahren kann auch so ablaufen, dass von dem die Kommunikationsgebühr ermittelnden Server eine die Kommunikationsgebühr beschreibende Gebührennachricht an ein Gebührenabrechnungssystem gesendet wird, welches unmittelbar nach Erhalt der Gebührennachricht die Kommunikationsgebühr abrechnet. Bei dieser Variante des erfindungsgemäßen Verfahrens kann vorteilhafterweise ein Gebührenabrechnungssystem verwendet werden, welches auch als "Online-Gebührenabrechnungssystem" oder "Prepaid-Gebührenabrechnungssystem" bezeichnet wird.

Zur weiteren Erläuterung der Erfindung ist in

Figur 1    ein Ausführungsbeispiel des Aufbaus einer Gruppe von Kommunikationsendgeräten, in
Figur 2    ein Ausführungsbeispiel der Ermittlung von Kommunikationsgebühren und in
Figur 3    ein weiteres Ausführungsbeispiel der Ermittlung von Kommunikationsgebühren dargestellt.

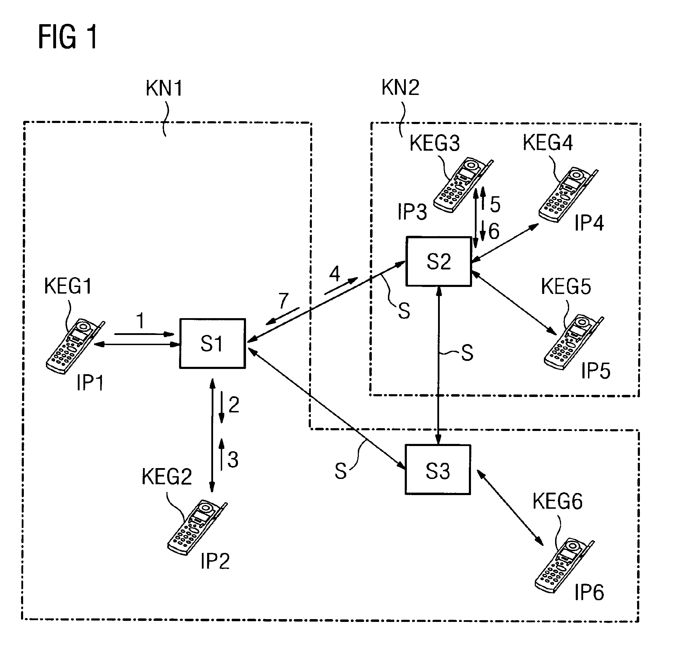

In Figur 1 sind sechs Kommunikationsendgeräte KEG1 bis KEG6 in Form von sechs Mobiltelefonen dargestellt. Das erste Kommunikationsendgerät KEG1, das zweite Kommunikationsendgerät KEG2 und das sechste Kommunikationsendgerät KEG6 befindet sich im Einflussbereich eines ersten paketorientiert arbeitenden Kommunikationsnetzes KN1. Das dritte Kommunikationsendgerät KEG3, das vierte Kommunikationsendgerät KEG4 und das fünfte Kommunikationsendgerät KEG5 befindet sich im Einflussbereich eines zweiten paketorientiert arbeitenden Kommunikationsnetzes KN2. Bei dem ersten paketorientierten Kommunikationsnetz KN1 und bei dem zweiten paketorientierten Kommunikationsnetz KN2 kann es sich beispielsweise um ein GPRS-Mobilfunknetz (GPRS = General Packet Radio Service) oder um ein UMTS-Mobilfunknetz (UMTS = Universal Mobile Telecommunications Service) handeln.

Dem ersten Kommunikationsendgerät KEG1 ist eine erste Adresse z.B. in Form einer ersten IP-Adresse IP1 zugeordnet, dem zweiten Kommunikationsendgerät KEG2, dem dritten Kommunikationsendgerät KEG3, dem vierten Kommunikationsendgerät KEG4, dem fünften Kommunikationsendgerät KEG5 und dem sechsten Kommunikationsendgerät KEG6 ist ebenfalls jeweils eine Adresse in Form z.B. einer IP-Adresse IP2, IP3, IP4, IP5 bzw. IP6 zugeordnet.

Das erste Kommunikationsendgerät KEG1 und das zweite Kommunikationsendgerät KEG2 sind in dem ersten Telekommunikationsnetz KN1 eingebucht und sind (aufgrund ihres aktuellen Aufenthaltsortes) einem ersten Server S1 zugeordnet. Dies ist gleichbedeutend damit, dass dem ersten Kommunikationsendgerät KEG1 und dem zweiten Kommunikationsendgerät KEG2 der erste Server S1 zugeordnet ist. Der erste Server S1 ist also für das erste Kommunikationsendgerät KEG1 und das zweite Kommunikationsendgerät KEG2 zuständig. Der Server S1 steuert einen Gruppenkommunikationsdienst und wird daher auch als "steuernder Server" bezeichnet. Das sechste Kommunikationsendgerät KEG6 ist auch in dem ersten Telekommunikationsnetz KN1 eingebucht und wurde aufgrund seines aktuellen Aufenthaltsortes einem dritten Server S3 zugeordnet. Dies ist gleichbedeutend damit, dass dem sechsten Kommunikationsendgerät KEG6 der dritte Server S3 zugeordnet ist. Dieser dritte Server S3 dient dem Verbindungsaufbau zu dem Kommunikationsendgerät KEG6 und zu dem das Kommunikationsendgerät KEG6 nutzenden Teilnehmer. Daher wird dieser Server S3 auch als "Teilnehmerserver" bezeichnet.

Die Kommunikationsendgeräte KEG3, KEG4 und KEG5 sind in dem zweiten Telekommunikationsnetz KN2 eingebucht. Aufgrund ihres aktuellen räumlichen Aufenthaltsortes innerhalb dieses zweiten Kommunikationsnetzes KN2 wurde den Kommunikationsendgeräten KEG3, KEG4 und KEG5 ein Server S2 zugeordnet, welcher in dem zweiten Kommunikationsnetz KN2 zur Realisierung des Gruppenkommunikationsdienstes vorhanden ist. Der Server S2 stellt ebenfalls einen Teilnehmerserver dar. Den Kommunikationsendgeräten KEG1 bis KEG6 ist also jeweils ein Server zugeordnet. Im Einzelnen ist im Ausführungsbeispiel den Kommunikationsendgeräten KEG1 bis KEG6 jeweils einer der Server S1, S2 oder S3 zugeordnet.

Der steuernde Server S1, der Teilnehmerserver S2 und der Teilnehmerserver S3 sind über ein Signalisierungssystem S verbindbar und können über dieses Signalisierungssystem S miteinander kommunizieren. Mittels eines derartigen Signalisierungssystems können z.B. SIP-Nachrichten (SIP = Session Initiation Protocol) zwischen den Servern übermittelt werden. Im Ausführungsbeispiel werden SIP-Nachrichten zwischen den Servern übermittelt.

Die Kommunikation zwischen den Kommunikationsendgeräten und den Servern wird durchgeführt auf die in Mobilfunknetzen übliche Art und Weise über die sog. Luftschnittstelle unter Benutzung von Basisstationen und Vermittlungsstellen der Mobilfunknetze. Diese Elemente sind in den Figuren nicht dargestellt.

Im Ausführungsbeispiel wird die Ermittlung von Kommunikationsgebühren anhand des Gruppenkommunikationsdienstes "Push to Talk over Cellular" (PoC) beschrieben. Bei diesem Gruppenkommunikationsdienst kann zwischen den Kommunikationsendgeräten einer Gruppe über ein paketorientiert arbeitendes Kommunikationsnetz eine gerichtete Sprachkommunikation stattfinden. Dabei erhält auf Anforderung jeweils ein Kommunikationsendgerät der Gruppe eine Genehmigung (Erlaubnis) zum Absenden einer Sprachnachricht und kann daraufhin eine Sprachnachricht an alle anderen Kommunikationsendgeräte der Gruppe absenden. Die Erlaubnis zum Absenden einer Sprachnachricht wird von dem steuernden Server S1 vergeben. (Es erhält zu jedem Zeitpunkt nur maximal ein Kommunikationsendgerät der Gruppe die Erlaubnis zum Absenden einer Sprachnachricht.) Nachdem die anderen Kommunikationsendgeräte der Gruppe diese Sprachnachricht empfangen haben, kann eines dieser anderen Kommunikationsendgeräte die Erlaubnis zum Absenden einer Sprachnachricht anfordern und nach Erhalt einer entsprechenden Erlaubnisnachricht (Genehmigungsnachricht) seinerseits eine Sprachnachricht an die anderen Kommunikationsendgeräte der Gruppe absenden.

Mittels der Figur 1 wird zunächst der Aufbau einer Gruppe von Kommunikationsendgeräten zur Durchführung des Dienstes "Push to Talk over Cellular" beschrieben.

Von dem ersten Kommunikationsendgerät KEG1 ausgehend soll eine Dienst-Sitzung (eine sogenannte "session") aufgebaut werden, an der die sechs Kommunikationsendgeräte KEG1 bis KEG6 teilnehmen. Die Kommunikationsendgeräte KEG1 bis KEG6 sollen zunächst einer gemeinsamen Gruppe von Kommunikationsendgeräten zugeordnet werden, innerhalb dieser Gruppe wird danach der Gruppenkommunikationsdienst durchgeführt. Zum Aufbau dieser Gruppe sendet das erste Kommunikationsendgerät KEG1 eine Nachricht 1 an den steuernden Server S1. Mit dieser Nachricht 1 wird der steuernde Server S1 angeregt, eine die sechs Kommunikationsendgeräte KEG1 bis KEG6 umfassende Gruppe von Kommunikationsendgeräten aufzubauen, d.h. die sechs Kommunikationsendgeräte KEG1 bis KEG6 als Teilnehmer der Gruppe zu registrieren.

Mittels der Nachricht 1 werden die sechs Adressen IP1 bis IP6 an den steuernden Server S1 übertragen. Der steuernde Server S1 registriert daraufhin das erste Kommunikationsendgerät KEG1 als Mitglied der Gruppe. Daraufhin sucht der steuernde Server S1 ein Kommunikationsendgerät mit der zweiten IP-Adresse IP2. Nach Ausführung einer Adressauflösung ("address resolution", welche als solche wohlbekannt ist und daher hier nicht näher erläutert wird) erhält der steuernde Server S1 von einem nicht dargestellten Adressenauflösungsknoten des ersten Kommunikationsnetzes KN1 die Information, dass das zweite Kommunikationsendgerät KEG2 mit der Adresse IP2 im ersten Kommunikationsnetz KN1 eingebucht ist und dass diesem zweiten Kommunikationsendgerät KEG2 der steuernde Server S1 zugeordnet ist.

Daraufhin sendet der steuernde Server S1 eine Nachricht 2 an das Kommunikationsendgerät KEG2. Mit dieser Nachricht 2 wird angefragt, ob das zweite Kommunikationsendgerät KEG2 in die aufzubauende Gruppe der Kommunikationsendgeräte aufgenommen werden soll. Die Nachricht 2 hat zur Folge, dass ein entsprechender Text auf dem Display des Kommunikationsendgerätes KEG2 ausgegeben wird. Nachdem ein Nutzer des Kommunikationsendgerätes KEG2 der Aufnahme des Kommunikationsendgerätes KEG2 in die Gruppe der Kommunikationsendgeräte zugestimmt hat, indem er beispielsweise eine Taste des Kommunikationsendgerätes KEG2 betätigt hat, sendet das Kommunikationsendgerät KEG2 eine entsprechende Nachricht 3 an den steuernden Server S1 zurück. Daraufhin nimmt der steuernde Server S1 das Kommunikationsendgerät KEG2 in die Gruppe der Kommunikationsendgeräte auf. Der steuernde Server S1 registriert in einer Datenbank das Kommunikationsendgerät KEG2 mit der Adresse IP2 als der Gruppe zugehörig. (Die Zustimmung des Nutzers zur Aufnahme des Kommunikationsendgerätes in die Gruppe ist optional.)

Daraufhin sucht der steuernde Server S1 das Kommunikationsendgerät mit der Adresse IP3. Der Adressenauflösungsknoten übermittelt dem steuernden Server S1 die Information, dass das Kommunikationsendgerät KEG3 aktuell im zweiten Kommunikationsnetz KN2 eingebucht ist. Daraufhin sendet der steuernde Server S1 eine Nachricht 4 an den im zweiten Kommunikationsnetz KN2 angeordneten Teilnehmerserver S2. (Diese Nachricht 4 kann ggf. unter Zwischenschaltung von Vermittlungsknoten bzw. Routern zu dem Server S2 übertragen werden unter Durchführung von weiteren Adressauflösungsschritten, bis die Nachricht 4 schließlich bei dem Teilnehmerserver S2 eintrifft.) Der Teilnehmerserver S2 sendet daraufhin eine Nachricht 5 an das Kommunikationsendgerät KEG3, woraufhin auf der Anzeige des Kommunikationsendgerätes KEG3 ein Anzeigetext erscheint. Mit diesem Anzeigetext wird angefragt, ob das Kommunikationsendgerät KEG3 in die Gruppe aufgenommen werden soll. Im Ausführungsbeispiel soll angenommen werden, dass ein Nutzer des Kommunikationsendgerätes KEG3 an dem Gruppenkommunikationsdienst teilnehmen will, weshalb er eine entsprechende Taste betätigt. Daraufhin sendet das Kommunikationsendgerät KEG3 eine Nachricht 6 an den Teilnehmerserver S2 zurück; der Teilnehmerserver S2 sendet eine entsprechende Nachricht 7 an den steuernden Server S1. Daraufhin nimmt der steuernde Server S1 das Kommunikationsendgeräte KEG3 in die Gruppe auf und vermerkt die Adresse IP3 in seiner Datenbank. In entsprechender Weise werden daraufhin die Kommunikationsendgeräte KEG4, KEG5 und KEG6 in die Gruppe aufgenommen.

Damit ist der Aufbau der Gruppe von Kommunikationsendgeräten für den "Push to Talk"-Dienst abgeschlossen. Zu der Gruppe gehören die Kommunikationsendgeräte KEG1 bis KEG6; der steuernde Server S1 steuert den "Push to Talk"-Dienst und die Teilnehmerserver S2 und S3 ermöglichen die Kommunikation mit den Kommunikationsendgeräten KEG3, KEG4, KEG5 bzw. KEG6. Genaugenommen gehören die Nutzer der Kommunikationsendgeräte zu der aufgebauten Gruppe. Die Nutzer werden durch ihre SIM-Karte identifiziert. Das Kommunikationsendgerät in Form eines Mobiltelefons, in das die SIM-Karte eingeschoben wird, ist austauschbar. Im Betriebszustand ist jedoch die SIM-Karte elektrisch und mechanisch mit dem Kommunikationsendgerät verbunden. In diesem Sinn ist die Formulierung "zu der Gruppe gehören die Kommunikationsendgeräte" zu verstehen.

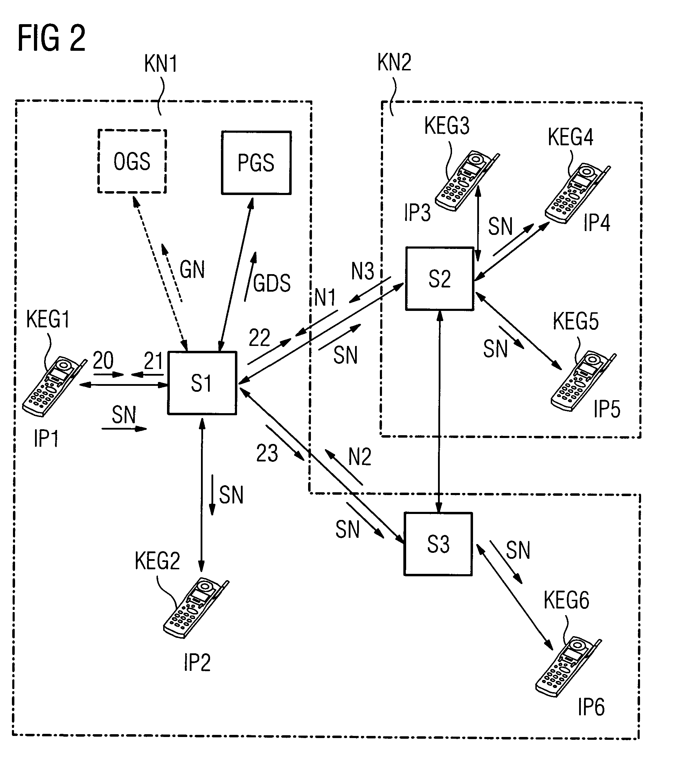

Wie in Figur 2 dargestellt ist, sendet nach dem Aufbau der Gruppe der Teilnehmerserver S2 eine Nachricht N1 an den steuernden Server S1. Mit dieser Nachricht N1 wird die Information übermittelt, dass insgesamt drei empfangsbereiten Kommunikationsendgeräten der Gruppe (nämlich den Kommunikationsendgeräten KEG3, KEG4 und KEG5) der Teilnehmerserver S2 zugeordnet ist. Es wird also die Anzahl der empfangsbereiten Kommunikationsendgeräte, welchen der Teilnehmerserver S2 zur Durchführung des "Push to Talk"-Dienstes zugeordnet ist, an den steuernden Server S1 übertragen. Die Nachricht N1 kann z.B. als SIP-Nachricht (SIP = Session Initiation Protocol) oder als SDP-Nachricht (SDP = Session Description Protocol) ausgestaltet sein, in deren "Header" ein Parameter bzw. ein Tag "Anzahl" eingefügt ist. In analoger Weise sendet der Teilnehmerserver S3 eine Nachricht N2 an den steuernden Server S1. Mit dieser Nachricht N2 wird die Information übertragen, dass lediglich dem einen empfangsbereiten Kommunikationsendgerät KEG6 der Teilnehmerserver S3 zugeordnet ist. Bei dem steuernden Server S1 ist außerdem abgespeichert, dass auch das empfangsbereite Kommunikationsendgerät KEG2 und das Kommunikationsendgerät KEG1 zu der Gruppe gehört. Mittels der bei dem Server S1 gespeicherten Daten und mittels der Nachrichten N1 und N2 ermittelt der steuernde Server S1 die Anzahl der aktuell empfangsbereiten und der Gruppe zugeordneten Kommunikationsendgeräte: Die Anzahl beträgt: 5 Kommunikationsendgeräte (3 + 1 + 2 -1). Bei der Ermittlung dieser Anzahl wurde bereits berücksichtigt, dass ein Kommunikationsendgerät jeweils als Sender einer (Sprach-)Nachricht dient und daher nicht zu den für diese Nachricht empfangsbereiten Kommunikationsendgeräten gezählt werden kann.

Nun wird der Beginn der Sprach-Kommunikation innerhalb der Gruppe von Kommunikationsendgeräten beschrieben. Zuerst soll eine Sprachnachricht von dem Kommunikationsendgerät KEG1 an die Kommunikationsendgeräte KEG2 bis KEG6 abgesendet werden. Ein Nutzer des Kommunikationsendgerätes KEG1 betätigt eine "Push-to-Talk"-Taste, woraufhin das Kommunikationsendgerät KEG1 eine Erlaubnisanforderungsnachricht (Genehmigungsanforderungsnachricht) 20 an den steuernden Server S1 sendet. Der steuernde Server S1 überprüft, ob aktuell bereits eine Erlaubnis zum Senden einer Sprachnachricht vergeben wurde, dies ist im Ausführungsbeispiel nicht der Fall. Daraufhin sendet der steuernde Server S1 mittels einer Erlaubnisnachricht (Genehmigungsnachricht) 21 eine entsprechende Erlaubnis an das erste Kommunikationsendgerät KEG1. Weiterhin informiert der steuernde Server S1 mittels Nachrichten 22 und 23 den Teilnehmerserver S2 und den Teilnehmerserver S3 über die vergebende Erlaubnis bzw. die versendete Erlaubnisnachricht 21. Dadurch wird verhindert, dass seitens der Teilnehmerserver S2 und S3 gleichzeitig weitere Erlaubnisnachrichten verschickt werden.

Es soll angenommen werden, dass zu diesem Zeitpunkt unvorhersehbarer Weise das dritte Kommunikationsendgerät KEG3 im Kommunikationsnetz KN2 nicht mehr erreicht werden kann, weil ein Auto, in dem dieses Kommunikationsendgerät KEG3 installiert ist, gerade in einem Tunnel eingefahren ist. Eine Information über diese Nichterreichbarkeit wird von die Kommunikation überwachenden Netzelementen des Kommunikationsnetzes KN2 an den Teilnehmerserver S2 übermittelt. Daraufhin sendet der Teilnehmerserver S2 eine Nachricht N3 an den steuernden Server S1. Mittels dieser Nachricht N3 wird der steuernde Server S1 darüber informiert, dass jetzt nur zu zwei empfangsbereiten Kommunikationsendgeräten der Gruppe der Teilnehmerserver S2 zugeordnet ist (nämlich zu den Kommunikationsendgeräten KEG4 und KEG5). Daraufhin errechnet der steuernde Server S1, dass ab Eintreffen der Nachricht N3 lediglich vier empfangsbereite Kommunikationsendgeräte in der Gruppe vorhanden sind (Anzahl der empfangsbereiten Kommunikationsendgeräte = 2 + 1 + 2 -1 ; es wurde wiederum bereits berücksichtigt, dass eines der Kommunikationsendgeräte der Gruppe (beispielsweise das Kommunikationsendgerät KEG1) als sendendes Kommunikationsendgerät nicht zu den empfangsbereiten Kommunikationsendgeräten zu zählen ist).

Jetzt sendet das Kommunikationsendgerät KEG1 eine Sprachnachricht SN ab, welche die anderen Kommunikationsendgeräte der Gruppe empfangen sollen. Diese Sprachnachricht SN wird von dem Server S1 an das Kommunikationsendgerät KEG2 übertragen.

Weiterhin wird die Sprachnachricht SN über den Server S2 an die Kommunikationsendgeräte KEG4 und KEG5 übertragen. Außerdem wird die Sprachnachricht SN über den Server S3 an das Kommunikationsendgerät KEG6 übertragen. (Die Sprachnachricht SN wird dabei nicht über das Signalisierungssystem S, sondern über das sog. Transportsystem übertragen.)

Der steuernde Server S1 bestimmt durch eine Zeitmessung bei der Übertragung der Sprachnachricht SN die zeitliche Dauer der Sprachnachricht SN: im Ausführungsbeispiel beträgt die zeitliche Dauer 20 s, d. h. die Sprachnachricht ist 20 s lang. Alternativ oder zusätzlich bestimmt der steuernde Server S1 durch eine Kapazitätsmessung bei der Übertragung der Sprachnachricht SN die Datenmenge der Sprachnachricht SN: im Ausführungsbeispiel beträgt die Datenmenge 1 Megabyte (1 MB), d. h. die Sprachnachricht weist eine Datenkapazität von 1 MB auf.

Der steuernde Server S1 bestimmt nun - wie oben ausführlich erläutert - nochmals die Anzahl der zum Übertragungszeitpunkt für diese Sprachnachricht empfangsbereiten Kommunikationsendgeräte: im Ausführungsbeispiel sind vier Kommunikationsendgeräte der Gruppe empfangsbereit (KEG2, KEG4, KEG5 und KEG6).

Der steuernde Server S1 berechnet nun die Höhe der Kommunikationsgebühr für die Nachricht SN. Im Ausführungsbeispiel ermittelt der steuernde Server S1 die Kommunikationsgebühr nach folgender Formel:

```
Kommunikationsgebühr = 20 s * 4 empfangsbereite Kommunikationsendgeräte * 1 Cent/s = 80 Cent.
```

Alternativ kann die Kommunikationsgebühr auch nach folgender Vorschrift berechnet werden:

```
Kommunikationsgebühr = 1 Megabyte * 4 empfangsbereite Kommunikationsendgeräte * 10 Cent/Megabyte = 40 Cent.
```

Daraufhin erstellt der steuernde Server S1 einen die Kommunikationsgebühr beschreibenden Gebührendatensatz GDS (ein sogenanntes Ticket) und sendet diesen Gebührendatensatz GDS an ein Gebührenabrechnungssystem PGS, welches zu einem späteren Zeitpunkt die Kommunikationsgebühr abrechnet. Ein derartiges Gebührenabrechnungssystem wird beispielsweise auch als Postpaid-Gebührenabrechnungssystem bezeichnet und dient zur Erstellung einer Rechnung in vorgegebenen zeitlichen Intervallen. In dem Gebührendatensatz GDS ist die Information enthalten, dass der Nutzer des Kommunikationsendgerätes KEG1 für das Versenden der Sprachnachricht SN mit der Kommunikationsgebühr in Höhe von 80 Cent zu belasten ist. Zu einem späteren Zeitpunkt wird also auf eine für den Nutzer zu erstellende Rechnung der Betrag von 80 Cent aufgenommen.

Alternativ kann der steuernde Server S1 auch eine die Kommunikationsgebühr beschreibende Gebührennachricht GN an ein Gebührenabrechnungssystem OGS senden, welches unmittelbar nach Erhalt der Gebührennachricht die Kommunikationsgebühr abrechnet. Derartige Gebührenabrechnungssysteme werden auch als Online-Gebührenabrechnungssysteme bezeichnet. Beispielsweise kann in derartigen Online-Gebührenabrechnungssystemen die Kommunikationsgebühr von einem vorausbezahlten Guthabenkonto des Nutzers des Kommunikationsendgerätes KEG1 abgebucht werden. Mit der Gebührennachricht GN wird eine Information über die Höhe der Kommunikationsgebühr (80 Cent) und über das mit der Kommunikationsgebühr zu belastende Konto des Nutzers des Kommunikationsendgerätes KEG1 übertragen.

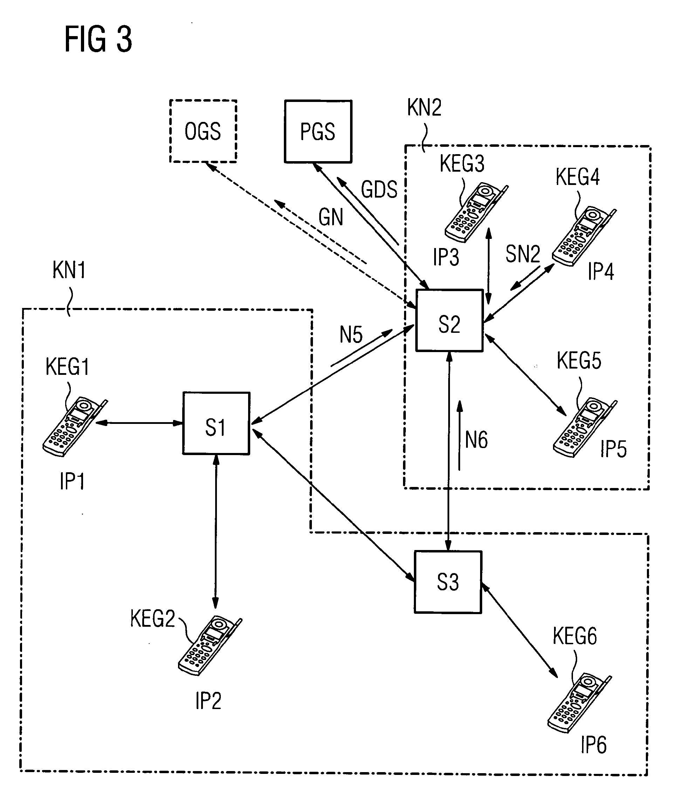

In Figur 3 ist ein weiteres Ausführungsbeispiel des erfindungsgemäßen Verfahrens dargestellt. Dieses Verfahren unterscheidet sich von dem im Zusammenhang mit Figur 2 dargestellten Verfahren dadurch, dass das Kommunikationsendgerät KEG4 eine Sprachnachricht SN2 an die anderen empfangsbereiten Kommunikationsendgeräte der Gruppe absenden soll. Bei diesem Verfahren sendet der steuernde Server S1 eine Nachricht N5 an den Teilnehmerserver S2. Die Nachricht N5 beinhaltet die Information, dass derzeit zwei empfangsbereiten Kommunikationsendgeräten (nämlich den Kommunikationsendgeräten KEG1 und KEG2) der steuernde Server S1 zugeordnet ist. Weiterhin sendet der Teilnehmerserver S3 eine Nachricht N6 an den Teilnehmerserver S2. Die Nachricht N6 beinhaltet die Information, dass derzeit nur einem Kommunikationsendgerät KEG6 der Teilnehmerserver S3 zugeordnet ist. Weiterhin ist bei dem Teilnehmerserver S2 abgespeichert, dass zu diesem Zeitpunkt die beiden empfangsbereiten Kommunikationsendgeräte KEG4 und KEG5 dem Teilnehmerserver S2 zugeordnet sind.

Nachdem das Kommunikationsendgerät KEG4 die an die anderen Kommunikationsendgeräte der Gruppe gerichtete Sprachnachricht SN2 abgesendet hat, wird diese Nachricht SN2 daraufhin an die empfangsbereiten Kommunikationsendgeräte KEG1, KEG2, KEG5 und KEG6 übertragen. Der Teilnehmerserver S2 bestimmt die Anzahl der zum Übertragungszeitpunkt für die Sprachnachricht SN2 empfangsbereiten Kommunikationsendgeräte. Diese Anzahl beträgt 2 + 1 + 2 - 1 = 4. Dabei wurde bereits berücksichtigt, dass das Sender-Kommunikationsendgeräte KEG4 nicht als für die Sprachnachricht SN2 empfangsbereites Kommunikationsendgerät zu zählen ist. Jetzt ermittelt der Teilnehmerserver S2 - wie im Zusammenhang mit Figur 2 ausführlich erläutert - die Kommunikationsgebühr für die Sprachnachricht SN2 unter Berücksichtigung der Anzahl der für die Sprachnachricht SN2 empfangsbereiten Kommunikationsendgeräte und der zeitlichen Dauer der Sprachnachricht oder der Datenmenge der Sprachnachricht. Daraufhin erstellt der Teilnehmerserver S2 - wie oben ausführlich erläutert - einen Gebührendatensatz GDS und sendet diesen an das Gebührenabrechnungssystem PGS. Alternativ kann der Teilnehmerserver S2 auch eine Gebührennachricht GN erstellen und an das Gebührenabrechnungssystem OGS senden.

Es wurde ein Verfahren beschrieben, mit dem bei Gruppenkommunikationsdiensten in einfacher und zuverlässiger Art und Weise Kommunikationsgebühren ermittelt werden können. Bei diesem Verfahren ist besonders vorteilhaft, dass von den an einem Gruppenkommunikationsdienst beteiligten Servern jeweils die Anzahl der (für eine zu übertragende Nachricht) empfangsbereiten Kommunikationsendgeräte (welchen die jeweiligen Server zugeordnet sind) an den die Ermittlung der Kommunikationsgebühren durchführenden Server übermittelt wird. Der die Ermittlung der Kommunikationsgebühren durchführende Server empfängt diese Information. Anhand der Anzahl der insgesamt für die zu übertragende Nachricht empfangsbereiten Kommunikationsendgeräte wird die Kommunikationsgebühr für die Übertragung dieser Nachricht ermittelt.

**Patentansprüche**

1. Verfahren zum Ermitteln von Kommunikationsgebühren bei einem für eine Gruppe von Kommunikationsendgeräten (KEG1, KEG2, KEG4, KEG5, KEG6) durchzuführenden Gruppenkommunikationsdienst,
wobei bei diesem Gruppenkommunikationsdienst

   - den Kommunikationsendgeräten der Gruppe jeweils ein Server (S1, S2, S3) zugeordnet ist,
   - jeweils einem Kommunikationsendgerät der Gruppe temporär eine Genehmigung erteilt wird, eine Sprachnachricht (SN) abzusenden, und
   - eine abgesendete Sprachnachricht an die anderen Kommunikationsendgeräte der Gruppe übertragen wird mittels der den Kommunikationsendgeräten der Gruppe zugeordneten Server (S1, S2, S3),

   wobei bei dem Verfahren

   - einer der Server (S1) von den anderen Servern (S2, S3) Informationen über die empfangsbereiten Kommunikationsendgeräte (KEG4, KEG5, KEG6) der Gruppe empfängt,
   - bei Übertragung einer Sprachnachricht (SN) von diesem Server mittels der empfangenen Informationen die Anzahl der zum Übertragungszeitpunkt für diese Sprachnachricht empfangsbereiten Kommunikationsendgeräte (KEG2, KEG4, KEG5, KEG6) bestimmt wird, und
   - anhand der bestimmten Anzahl der Kommunikationsendgeräte die Höhe der für diese Sprachnachricht (SN) anzuwendenden Kommunikationsgebühr ermittelt wird.

2. Verfahren nach Anspruch 1,
**dadurch gekennzeichnet, dass**

   - bei Aufbau der Gruppe von Kommunikationsendgeräten der eine Server (S1) die Informationen über die empfangsbereiten Kommunikationsendgeräte der Gruppe empfängt.

3. Verfahren nach Anspruch 1 oder 2,
**dadurch gekennzeichnet, dass**

   - bei einer Änderung der Anzahl der empfangsbereiten Kommunikationsendgeräte der Gruppe der eine Server (S1) die Informationen über die empfangsbereiten Kommunikationsendgeräte der Gruppe empfängt.

4. Verfahren nach einem der vorhergehenden Ansprüche,
**dadurch gekennzeichnet, dass**

   - anhand der bestimmten Anzahl und der zeitlichen Dauer der Sprachnachricht (SN) die Höhe der für diese Sprachnachricht (SN) anzuwendenden Kommunikationsgebühr ermittelt wird.

5. Verfahren nach einem der vorhergehenden Ansprüche,
**dadurch gekennzeichnet, dass**

   - anhand der bestimmten Anzahl und der Datenmenge der Sprachnachricht (SN) die Höhe der für diese Sprachnachricht (SN) anzuwendenden Kommunikationsgebühr ermittelt wird.

6. Verfahren nach einem der vorhergehenden Ansprüche,
**dadurch gekennzeichnet, dass**

   - die zeitliche Dauer der Sprachnachricht oder die Datenmenge der Sprachnachricht von dem Server (S1) ermittelt wird, der dem die Sprachnachricht absendenden Kommunikationsendgerät (KEG1) jeweils zugeordnet ist.

7. Verfahren nach einem der vorhergehenden Ansprüche,

**dadurch gekennzeichnet, dass**

- von dem die Kommunikationsgebühr ermittelnden Server (S1) ein die Kommunikationsgebühr beschreibender Gebührendatensatz (GDS) an ein Gebührenabrechnungssystem (PGS) gesendet wird, welches zu einem späteren Zeitpunkt die Kommunikationsgebühr abrechnet.

8. Verfahren nach einem der Ansprüche 1 bis 6,
**dadurch gekennzeichnet, dass**

- von dem die Kommunikationsgebühr ermittelnden Server (S1) eine die Kommunikationsgebühr beschreibende Gebührennachricht (GN) an ein Gebührenabrechnungssystem (OGS) gesendet wird, welches unmittelbar nach Erhalt der Gebührennachricht die Kommunikationsgebühr abrechnet.

FIG 1

# FIG 2

# FIG 3

Europäisches
Patentamt

**EUROPÄISCHER RECHERCHENBERICHT**

Nummer der Anmeldung

EP 05 09 0099

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | ANONYMOUS: "3GPP TS 32.272 V1.0.0 (2005-02); 3rd Generation Partnership Project; Technical Specification Group Service and System Aspects;Telecommunication managment; Charging management; Push-to-talk over Cellular (PoC) charging; (Release 6)" 3GPP, [Online] Februar 2005 (2005-02), XP002343600 INTERNET PUBLICATION Gefunden im Internet: URL:ftp://ftp.3gpp.org/specs/archive/32_series/32.272/> [gefunden am 2005-09-05] * Seiten 24-25 * ----- | 1-8 | H04M15/00 H04M15/12 H04L12/14 H04L12/56 H04L12/18 H04Q7/38 |
| X | US 2002/150091 A1 (LOPPONEN JUSSI ET AL) 17. Oktober 2002 (2002-10-17) * Zusammenfassung * * Absätze [0012] - [0073], [0110], [0116] * * Absätze [0124] - [0164], [0171] * * Absätze [0203] - [0212] * ----- | 1-8 | |
| A | EP 1 505 849 A (SIEMENS AKTIENGESELLSCHAFT) 9. Februar 2005 (2005-02-09) * Zusammenfassung * * Absätze [0013], [0018] - [0023] * * Absätze [0036] - [0038] * ----- | 1,8 | RECHERCHIERTE SACHGEBIETE (Int.Cl.7) H04M H04L H04Q |

Der vorliegende Recherchenbericht wurde für alle Patentansprüche erstellt

| Recherchenort | Abschlußdatum der Recherche | Prüfer |
|---|---|---|
| München | 15. September 2005 | Kahl, M |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 09 0099

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2005

| Im Recherchenbericht angeführtes Patentdokument | Datum der Veröffentlichung | Mitglied(er) der Patentfamilie | Datum der Veröffentlichung |
|---|---|---|---|
| US 2002150091    A1 | 17-10-2002 | CA      2444406 A1 | 24-10-2002 |
| | | CN      1625907 A | 08-06-2005 |
| | | EP      1393588 A1 | 03-03-2004 |
| | | WO      02085051 A1 | 24-10-2002 |
| | | JP   2004535097 T | 18-11-2004 |
| | | MX   PA03009486 A | 05-05-2004 |
| | | US   2002150092 A1 | 17-10-2002 |
| | | ZA      200307948 A | 21-06-2004 |
| EP 1505849       A | 09-02-2005 | DE     10335432 A1 | 03-03-2005 |
| | | US   2005058070 A1 | 17-03-2005 |

EPO FORM P0461

Für nähere Einzelheiten zu diesem Anhang : siehe Amtsblatt des Europäischen Patentamts, Nr.12/82